# EUROPÄISCHE PATENTSCHRIFT

(11) **EP 0 695 860 B1**
(45) Veröffentlichungstag und Bekanntmachung des Hinweises auf die Patenterteilung: **20.01.1999**
(21) Anmeldenummer: 95810458.0
(22) Anmeldetag: 11.07.1995
(51) Int. Cl.: F02C 6/16, F01K 21/04

(54) **Luftspeicherturbine**
Gasturbine power station with air storage system
Centrale à turbine à gaz avec stockage d'air comprimé

(30) Priorität: 05.08.1994 CH 2453/94
(43) Veröffentlichungstag der Anmeldung: 07.02.1996
(73) Patentinhaber: ASEA BROWN BOVERI AG, 5400 Baden (CH)
(72) Erfinder: Frutschi, Hans Ulrich, CH-5223 Riniken (CH)

(56) Entgegenhaltungen:
- EP-A- 0 076 529
- EP-A- 0 079 624
- EP-A- 0 150 990
- EP-A- 0 318 706
- WO-A-81/02443
- WO-A-92/22741
- DE-A- 2 636 417
- FR-A- 2 230 864
- US-A- 4 765 142
- US-A- 5 329 758

## Beschreibung

### Technisches Gebiet

Die vorliegende Erfindung betrifft eine Luftspeicherturbine gemäss Oberbegriff des Anspruchs 1. Sie betrifft auch ein Verfahren zum Betrieb einer solchen Luftspeicherturbine.

### Stand der Technik

Bekanntgeworden sind sogenannte Luftspeicherturbinen, bei welchen der Verdichter vom Generator motorisch angetrieben einen Druckluftspeicher füllt, und so während Schwachstromzeiten mittelbare elektrische Energie speichert. Während Hochlastzeiten wird dann die gespeicherte Druckluft in durch Brennstoff erhitzten Zustand in der Turbine entspannt, wobei dann die so gewonnene Leistung über den Generator vollumfänglich ans Stromnetz abgegeben wird. Dabei können solche Luftspeicherturbinen mit einem stromab der Turbinen zugeschalteten Dampfkreislauf ergänzt sein.

Es ist ferner bekanntgeworden, dass solche Luftspeicherturbinen im durchgeschalteten, gleichzeitigen Betrieb von Verdichter und Turbine als reine Gasturbine betrieben werden können. Dabei ist es möglich, den Druckluftspeicher zur Regelung der Leistung als regelbare Kapazität zuzuschalten.

Für den Fall, dass die Anlage vornehmlich im Speicherbetrieb zur Spitzendeckung arbeitet, ergibt sich vorliegend noch nicht das maximal mögliche Leistungspotential, was die Wirtschaftlichkeit der Anlage im negativen Sinne stark beeinflusst.

### Darstellung der Erfindung

Hier will die Erfindung Abhilfe schaffen. Der Erfindung, wie sie in den Ansprüchen gekennzeichnet ist, liegt die Aufgabe zugrunde, bei einer Luftspeicherturbine und einem Verfahren zum Betrieb einer solchen Luftspeicherturbine der eingangs genannten Art die Leistungs- und Wirkungsgradsausbeute zu maximieren.

Erfindungsgemäss wird dies dadurch erreicht, indem eine Rekuperation sowohl der Turbinenabgase, als auch der Abwärme des Zwischenkühlers der Verdichtergruppe eingeleitet wird.

In einem Abhitzedampferzeuger, stromab der Gasturbogruppe, wird innerhalb mindestens einer Druckstufe Dampf erzeugt, welcher der verdichteten Luft möglichst vor oder während der Verbrennung des Brennstoffes beigefügt wird, so dass sich die Turbinenleistung um etwa 30-40% erhöht.

Auf der Verdichterseite wird durch mindestens einmalige Zwischenkühlung der Leistungsverbrauch des Verdichters reduziert und die Verdichterwärme zur Erhitzung von Druckwasser verwendet. Dieses Druckwasser wird dann in einem Partialdruckverdampfer in die relativ kalte Druckluft eingedüst, so dass eine teilweise Verdampfung unter Partialdruck stattfinden kann. Dadurch werden der Druckluft ebenfalls 15-20% Wasserdampf zugemischt, so dass sich die Turbinenleistung nochmals um ca. 30-40% erhöht.

Aus EP-0 076 529 A1 ist ein Luftspeichergasturbinenkraftwerk bekanntgeworden, bei welchem zur Leistungssteigerung das in den Verdichterkühlern der Verdichtergruppe anfallende Wasserkondensat in Behältern gesammelt und in die Brennkammern der Gasturbine eingeführt wird. Diese direkte Einführung von Wasserkondensat in die Gasturbine erweist sich indessen als zu wenig effizient, da für die Leistungssteigerung keine entsprechende qualitativ taugliche Dampfmenge zur Verfügung steht.

Um dieses Arbeitsprinzip ebenfalls im Speicherbetrieb aufrecht zu erhalten, ist neben dem Druckluftspeicher auch noch ein Heisswasserspeicher erforderlich. Das im Partialdruckverdampfer verdampfte Wasser muss laufend durch neues Wasser ersetzt werden.

Ein Ersatz des Abhitzedampferzeugers durch einen Rekuperator zur Vorwärmung der Druckluft nach dem Partialdruckverdampfer ist an sich auch möglich. Eine solche Schaltung führt dazu, dass der Wirkungsgrad zwar damit gesteigert wird, indessen die Leistung der Turbine wegen des fehlenden Dampfanteils geschwächt wird.

Selbstverständlich besteht die Möglichkeit einer Teilrekuperation der heissen Turbinenabgase zur Luftvorwärmung, wobei dann die Dampferzeugung im Abhitzedampferzeuger entsprechend zurückgeht. Diese Massnahme kann zur Optimierung der Luftspeicherturbine herangezogen werden.

Vorteilhafte und zweckmässige Weiterbildungen der erfindungsgemässen Aufgabenlösung sind in den weiteren Ansprüche gekennzeichnet.

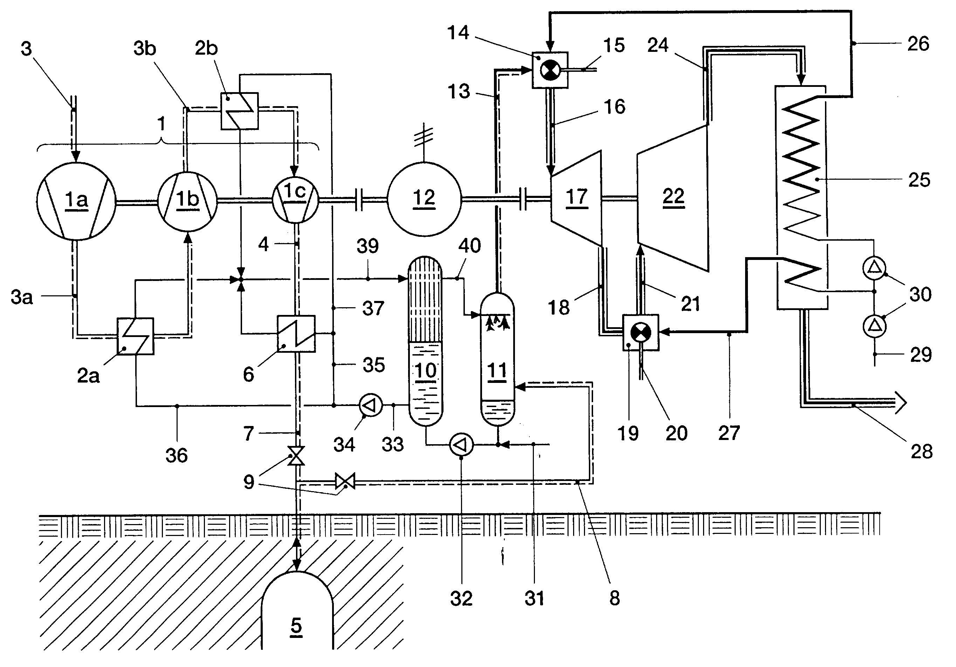

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt ein Luft-Dampf-Speicherkraftwerk. Wege zur Ausführung der Erfindung, gewerbliche Verwertbarkeit

Die Figur zeigt ein Luft-Dampf-Speicherkraftwerk, welches, nach Aggregaten aufgelistet, aus einer Gasturbogruppe, einem Abhitzedampferzeuger 25, einem Druckluftspeicher 5 und verschiedenen sonstigen Speichern resp. Hilfsaggregaten besteht. Die Gasturbogruppe selbst besteht aus einer aus mehreren Verdichtern 1a, 1b, 1c bestehenden Verdichtereinheit 1, welche stromauf eines Brennkammer- und Turbinensystems 14, 17; 19, 22 wirkt. Der letzten Turbine 22 nachgeschaltet wirkt der Abhitzedampferzeuger 25 zur Bereitstellung von Dampf, der allgemein in die Gasturbogruppe rückgeführt wird. Die endverdichtete Luft 4 aus dem letzten Verdichter 1c kann einerseits in einen Druckluftspeicher 5 oder über eine Abzweigung in einen Partialdruckverdampfer 11 strömen, der sich stromauf einer ersten Brennkammer 14, der Hochdruck-Brennkammer, der Gasturbogruppe befindet, d.h., die endverdichtete Luft 4 strömt direkt in den Druckluftspeicher 5, oder direkt in den Partialdruckverdampfer 11, oder teilweise in den Druckluftspeicher 5 und nach Bedarf teilweise in den Partialdruckverdampfer 11. Im Zusammenhang mit den übrigen Hilfsaggregaten ergibt sich folgende Schaltung und Wirkungsweise: Die angesaugte Luft 3 strömt zunächst in einen ersten Verdichter la, in welchem eine erste Teilkompression stattfindet. Diese vorverdichtete Luft 3a durchläuft anschliessend einen ersten Zwischenkühler 2a, bevor sie mit abgesenkter Temperatur einen zweiten nachgeschalteten Verdichter 1b beaufschlägt. Auch diese zusätzlich verdichtete Luft 3b durchläuft einen weiteren nachgeschalteten Zwischenkühler 2b, bevor sie endgültig in einen dritten Verdichter lc geleitet wird, in welchem die Endverdichtung stattfindet. Anschliessend durchströmt diese endverdichtete Luft 4 einen Wärmetauscher 6, der sich ström- auf des bereits erwähnten Druckluftspeichers 5 befindet, in welchem sie ein drittes Mal abgekühlt wird. Stromauf dieses Druckluftspeichers 5 zweigt eine Leitung 8 ab, welche verdichtete Arbeitsluft heranführt und grundsätzlich als Entnahmeleitung dient, oder aber direkt mit der endverdichteten gekühlte Luft 7 durchströmt wird. Diese wechselweise Schaltungsmöglichkeit wird durch eine Reihe von Stellgliedern 9 aufrechterhalten, die entsprechend angesteuert werden. Zum Druckluftspeicher 5 selbst ist folgendes zu sagen: Dieser nimmt die verdichtete gekühlte Luft 7 des letzten Verdichters 1c auf, wobei die Verdichter 1a, 1b, 1c durch die nun als Motor arbeitende elektrische Maschine 12 angetrieben werden und so die zu speichernde Energie aus dem Stromnetz beziehen. In beiden Schaltungsfällen, nämlich sowohl im durchgeschalteten Gasturbobetrieb als auch im Entladebetrieb des Druckluftspeiches 5, strömt die relativ kalte verdichtete Arbeitsluft über die Leitung 8 zunächst in den Partialdruckverdampfer 11, in welchem über eine Leitung 40 eine Zumischung mit einem Anteil Heisswasser aus einem stromauf wirkenden Heisswasserspeicher 10 stattfindet, dessen schaltungstechnische Bereitstellung weiter unten näher erläutert wird. Durch diese Eindüsung eines Anteils Heisswasser 40 stromauf der ersten Brennkammmer 14 findet eine Teilverdampfung des Heisswassers 40 unter Partialdruck statt, dergestalt, dass der durch Leitung 8 strömenden Arbeitsluft im Grunde genommen ein erster Wasserdampfanteil in der Grössenordnung von 15-20% zugemischt wird. Alsdann strömt dieses Luft/Wasserdampf-Gemisch 13 als Verbrennungsluft in die Hochdruck-Brennkammer 14, in welcher unter Zugabe eines Brennstoffes 15 Heissgase 16 erzeugt werden, welche anschliessend eine Hochdruck-Turbine 17 beaufschlagen. Die Abgase 18 aus dieser Hochdruck-Turbine 17 werden in eine Niederdruck-Brennkammer 19 geleitet, in welcher unter Zugabe eines Brennstoffes 20 eine weitere kalorische Aufbereitung zu Heissgasen 21 stattfindet. Diese beaufschlagen dann eine Niederdruck-Turbine 22, in welcher zunächst die endgültige Entspannung stattfindet. Die Abgase 24 daraus werden durch den Abhitzedampferzeuger 25 geleitet, in welchem Dampf verschiedener Druckniveaus bereitgestellt wird. Ein Anteil Dampf 26 hoheren Druckes wird in die Hochdruck-Brennkammer 14, ein anderer Anteil Dampf 27 tieferen Druckes in die Niederdruck-Brennkammer 19 eingeleitet. Die Speisung des Abhitzedampferzeugers 25 mit Wasser ist anhand der schematisch dargestellten Leitung 29 mit den dazugehörigen Speisepumpen 30 versinnbildlicht. Diese Dampfbeifügung hat einen doppelten Effekt: Zunächst wird die jeweilige Turbinenleistung um 30-40% erhöht, zum anderen werden die NOx-Emissionen durch die Wirkung des Dampfes auf die Flammentemperatur minimiert. Die kalorisch weitgehend vollgenutzten Abgase durch den Abhitzedampferzeuger 25 strömen dann als Rauchgase 28 über einen Kamin ins Freie. Die Schaltung dieses Luft-Dampf-Speicherkraftwerkes verfügt über einen zweiten Wasserkreislauf, der mit sämtlichen den Verdichtern 1a, 1b, 1c zugeordneten Zwischekühlern 2a, 2b, mit dem stromab des letzten Verdichters lc wirkenden Wärmetauschers 6 sowie mit dem stromauf des Partialdruckverdampfers 11 wirkenden Heisswasserspeicher 10 in Wirkverbindung steht. Eine Wasserleitung 31 ersetzt das im Partialdruckverdampfer 11 verdampfende Wasser, welches der endverdichteten Arbeitsluft 8 beigemischt, über den Weg der Brennkammern 14, 19, Turbinen 17, 22 und Abhitzedampferzeuger 25 durch den Kamin 28 entweicht. Ansonsten übernimmt ein Zirkulationswasserstrom 33, aufgeteilt in Teilströme 35, 36, 37, die Wärmeabfuhr in den Kühlern 2a, 2b und 6. Dadurch wird das Wasser auf hohes Temperaturniveau gebracht und über eine Leitung 39 und über den Heisswasserspeicher 10 dem Partialdruckverdampfer 11 über Leitung 40 zugeführt.

### Bezugszeichenliste

- 1: Verdichtereinheit
- 1a, 1b, 1c: Verdichter
- 2a, 2b: Zwischenkühler
- 3a, 3b: Teilverdichtete Luft
- 4: Endverdichtete Luft
- 5: Druckluftspeicher
- 6: Wärmetauscher
- 7: Luftleitung zum Druckluftspeicher, gekühlte Druckluft
- 8: Leitung für verdichtete Arbeitsluft
- 9: Stellglieder
- 10: Heisswasserspeicher
- 11: Partialdruckverdampfer
- 12: Elektrische Maschine (Motor/Generator)
- 13: Luft/Wasserdampf-Gemisch
- 14: Erste Brennkammer (HD-Brennkammer)
- 15: Brennstoff
- 16: Heissgase
- 17: Erste Turbine (HD-Turbine)
- 18: Abgase aus der HD-Turbine
- 19: Zweite Brennkammer (ND-Brennkammer)
- 20: Brennstoff
- 21: Heissgase
- 22: Zweite Turbine (ND-Turbine)
- 24: Abgase
- 25: Abhitzedampferzeuger
- 26: Dampfleitung zur HD-Brennkammer
- 27: Dampfleitung zur ND-Brennkammer
- 28: Rauchgase zum Kamin
- 29: Wasserleitung
- 30: Speisepumpen
- 31: Wasserleitung
- 32: Umwälzpumpe
- 33: Leitung aus dem Warmwasserspeicher
- 34: Umwälzpumpe
- 35, 36, 37: Leitungen für Teilströme
- 39: Rückführungsleitung
- 40: Heisswasser, Leitung

## Patentansprüche

1. Luftspeicherturbine, im wesentlichen bestehend aus einer trennbaren Gasturbogruppe, einem Druckluftspeicher (5), und einem der Gasturbogruppe nachgeschalteten Abhitzedampferzeuger (25), wobei die Gasturbogruppe aus mindestens einem Verdichter (1), mindestens einer Brennkammer (14, 19) und mindestens einer Turbine (17, 22) besteht, und aus Mitteln zur Einleitung einer Dampfmenge aus dem Abhitzedampferzeuger in die Gasturbogruppe zur Erhöhung der Leistung der Turbine, dadurch gekennzeichnet, dass die Luftspeicherturbine einen Heisswasserspeicher (10) aufweist und Mittel zur Einleitung eines Heisswassers (39) aus mindestens einem dem Verdichter nachgeschalteten Wärmetauscher (6) über einen Partialdruckverdampfer (11) in verdichtete Arbeitsluft (8).

2. Luftspeicherturbine nach Anspruch 1, dadurch gekennzeichnet, dass der Heisswasserspeicher (10) mit dem Partialdruckverdampfer (11) parallel geschaltet ist.

3. Luftspeicherturbine nach den Ansprüchen 1 und 2, dadurch gekennzeichnet, dass der Verdichter (1) in Teilverdichter (1a, 1b, 1c) mit dazwischengeschalteten heisswassererzeugenden Zwischenkühlern (2a, 2b) aufgeteilt ist.

4. Luftspeicherturbine nach Anspruch 1, dadurch gekennzeichnet, dass Mittel zur Einleitung einer Dampfmenge (26, 27) aus dem Abhitzedampferzeuger (25) in die Verbrennungsluft (13, 18) vorhanden sind.

5. Verfahren zum Betreiben einer Luftspeicherturbine nach Anspruch 1, welche im wesentlichen aus einer trennbaren Gasturbogruppe, einem Druckluftspeicher, einem Heisswasserspeicher und einem der Gasturbine nachgeschalteten Abhitzedampferzeuger besteht, wobei die Gasturbogruppe aus mindestens einem Verdichter, mindestens einer Brennkammer und mindestens einer Turbine besteht, wobei ein mindestens in einem zum Verdichter gehörigen Wärmetauscher erzeugtes Heisswasser in einen Partialdruckverdampfer eingedüst wird, und wobei ein Teil dieses Heisswassers unter Partialdruck verdampft und der verdichteten Arbeitsluft beigemischt wird.

6. Verfahren nach Anspruch 5, wobei bei reinem Luftspeicherbetrieb der alleinige Betrieb des Verdichters durch die elektrische Maschine im motorischen Betrieb aufrechterhalten wird, dadurch gekennzeichnet, dass das in den Wärmetauschern (2a, 2b, 6) anfallende Heisswasser (39) im Heisswasserspeicher (10) gespeichert wird, und dass vom Verdichter (1) geförderte Druckluft (4, 7) im Druckluftspeicher (5) gespeichert wird.

7. Verfahren nach Anspruch 5, wobei bei alleinigem Betrieb der Turbine mit der zugehörigen Brennkammer die elektrische Maschine generatorisch betrieben wird, dadurch gekennzeichnet, dass die aus dem Druckluftspeicher (5) entnommene, verdichtete Arbeitsluft (8) im Partialdruckverdampfer (11) mit ausgedampftem Wasser aus dem Heisswasserspeicher (10) mindestens teilweise gesättigt wird.

8. Verfahren nach Anspruch 5, dadurch gekennzeichnet, dass bei Vollastbetrieb der Gasturbogruppe im Regelungsbetrieb eine überschüssige oder fehlende verdichtete Luftmenge in den Druckluftspeicher (5) geleitet oder von dort entnommen wird, und dass anteilmässiges Heisswasser (39) in den Heisswasserspeicher (10) eingeleitet oder von dort entnommen wird.

## Claims

1. Air-storage turbine, essentially comprising a separable gas-turbine group, a compressed-air reservoir (5), and a heat-recovery steam generator (25) connected downstream of the gas-turbine group, the gas-turbine group comprising at least one compressor (1), at least one combustion chamber (14, 19) and at least one turbine (17, 22), and means for directing a steam quantity from the heat-recovery steam generator into the gas-turbine group for increasing the output of the turbine, characterized in that the air-storage turbine has a hot-water reservoir (10) and means for directing hot water (39) from at least one heat exchanger (6), connected downstream of the compressor, via a partial-pressure evaporator (11) into compressed working air (8).

2. Air-storage turbine according to Claim 1, characterized in that the hot-water reservoir (10) is connected in parallel with the partial-pressure evaporator (11).

3. Air-storage turbine according to Claims 1 and 2, characterized in that the compressor (1) is divided into compressor sections (1a, 1b, 1c) with hot-water-generating intercoolers (2a, 2b) connected in between.

4. Air-storage turbine according to Claim 1, characterized in that there are means for directing a steam quantity (26, 27) from the heat-recovery steam generator (25) into the combustion air (13, 18).

5. Method of operating an air-storage turbine according to Claim 1, which essentially comprises a separable gas-turbine group, a compressed-air reservoir, a hot-water reservoir, and a heat-recovery steam generator connected downstream of the gas turbine, the gas-turbine group comprising at least one compressor, at least one combustion chamber and at least one turbine, hot water generated at least in one heat exchanger belonging to the compressor being injected into a partial-pressure evaporator, some of this hot water being evaporated under partial pressure and being admixed to the compressed working air.

6. Method according to Claim 5, in which, during pure air-storage operation, the isolated operation of the compressor is maintained by the electrical machine in motor operation, characterized in that the hot water (39) collecting in the heat exchangers (2a, 2b, 6) is stored in the hot-water reservoir (10), and in that compressed air (4, 7) delivered by the compressor (1) is stored in the compressed-air reservoir (5).

7. Method according to Claim 5, in which, during isolated operation of the turbine with the associated combustion chamber, the electrical machine is operated as a generator, characterized in that the compressed working air (8) extracted from the compressed-air reservoir (5) is at least partly saturated in the partial-pressure evaporator (11) with evaporated water from the hot-water reservoir (10).

8. Method according to Claim 5, characterized in that, during full-load opertion of the gas-turbine group in regulation mode, an excess or deficient compressed air quantity is directed into the compressed-air reservoir (5) or is extracted therefrom, and in that proportionate hot water (39) is directed into the hot-water reservoir (10) or is extracted therefrom.

## Revendications

1. Centrale à turbine à gaz avec stockage d'air comprimé, se composant essentiellement d'un turbo-groupe à gaz séparable, d'un réservoir d'air comprimé (5), et d'un générateur de vapeur de récupération (25), disposé après le turbo-groupe à gaz, dans laquelle le turbo-groupe à gaz se compose d'au moins un compresseur (1), d'au moins une chambre de combustion (14, 19) et d'au moins une turbine (17, 22), et de moyens pour introduire une quantité de vapeur provenant du générateur de vapeur de récupération dans le turbo-groupe à gaz pour augmenter la puissance de la turbine, caractérisée en ce que la centrale à turbine à gaz avec stockage d'air comprimé présente un réservoir d'eau chaude (10) et des moyens pour introduire de l'eau chaude (39) provenant d'au moins un échangeur de chaleur (6) disposé après le compresseur, via un évaporateur à pression partielle (11), dans l'air de travail comprimé (8).

2. Centrale à turbine à gaz avec stockage d'air comprimé suivant la revendication 1, caractérisée en ce que le réservoir d'eau chaude (10) est monté en parallèle avec l'évaporateur à pression partielle (11).

3. Centrale à turbine à gaz avec stockage d'air comprimé suivant les revendications 1 et 2, caractérisée en ce que le compresseur (1) est subdivisé en compresseurs partiels (1a, 1b, 1c) avec des refroidisseurs intermédiaires (2a, 2b) de production d'eau chaude disposés entre eux.

4. Centrale à turbine à gaz avec stockage d'air comprimé suivant la revendication 1, caractérisée en ce qu'il est prévu des moyens pour introduire une quantité de vapeur (26, 27) provenant du générateur de vapeur de récupération (25) dans l'air de combustion (13, 18).

5. Procédé de conduite d'une centrale à turbine à gaz avec stockage d'air comprimé suivant la revendication 1, qui se compose essentiellement d'un turbo-groupe à gaz séparable, d'un réservoir d'air comprimé, d'un réservoir d'eau chaude et d'un générateur de vapeur de récupération disposé après la turbine à gaz, dans laquelle le turbo-groupe à gaz se compose d'au moins un compresseur, d'au moins une chambre de combustion et d'au moins une turbine, dans lequel une eau chaude produite au moins dans un échangeur de chaleur faisant partie du compresseur est injectée dans un évaporateur à pression partielle et dans lequel une partie de cette eau chaude est vaporisée sous pression partielle et est mélangée à l'air de travail comprimé.

6. Procédé suivant la revendication 5, dans lequel, en cas de marche avec le réservoir d'air uniquement, seule la marche du compresseur est maintenue par la machine électrique fonctionnant en moteur, caractérisé en ce que l'eau chaude (39) générée dans les échangeurs de chaleur (2a, 2b, 6) est stockée dans le réservoir d'eau chaude (10), et en ce que l'air comprimé (4, 7) fourni par le compresseur (1) est stocké dans le réservoir d'air comprimé (5).

7. Procédé suivant la revendication 5, dans lequel, en cas de marche de la turbine seule avec la chambre de combustion correspondante, la machine électrique fonctionne en générateur, caractérisé en ce que l'air de travail comprimé (8), prélevé hors du réservoir d'air comprimé (5) est saturé au moins partiellement, dans l'évaporateur à pression partielle (11), avec de l'eau évaporée provenant du réservoir d'eau chaude (10).

8. Procédé suivant la revendication 5, caractérisé en ce que, en cas de marche à pleine charge du turbo-groupe à gaz en marche régulée, une quantité d'air comprimé, excédentaire ou déficitaire, est conduite dans le réservoir d'air comprimé (5) ou en est prélevée, et en ce que de l'eau chaude (39) est, en proportion, introduite dans le réservoir d'eau chaude (10) ou en est prélevée.
